(19)

**Europäisches Patentamt**
**European Patent Office**
**Office européen des brevets**

(11) **EP 4 679 031 A1**

(12) **EUROPEAN PATENT APPLICATION**

(43) Date of publication:
**14.01.2026 Bulletin 2026/03**

(51) International Patent Classification (IPC):
**G01C 15/00** (2006.01)    **F41G 3/00** (2006.01)
**G01C 25/00** (2006.01)    **G01S 17/06** (2006.01)

(21) Application number: **24187553.3**

(22) Date of filing: **09.07.2024**

(52) Cooperative Patent Classification (CPC):
**G01C 25/00; F41G 3/06; F41G 3/08; G01C 15/002;**
**G01S 17/10; G01S 17/86; G01S 17/931**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Safran Vectronix AG**
**9435 Heerbrugg (CH)**

(72) Inventors:
• **KIRSCHNER, Holger René**
**77550 MOISSY-CRAMAYEL (FR)**
• **CULHA, Onur**
**77550 MOISSY-CRAMAYEL (FR)**
• **FLORYAN, Marek**
**77550 MOISSY-CRAMAYEL (FR)**

(74) Representative: **Cabinet Boettcher**
**5, rue de Vienne**
**75008 Paris (FR)**

(54) **METHOD FOR COMPENSATING AN ERROR OF A DIGITAL MAGNETIC COMPASS ASSOCIATED WITH A SIGHT DEVICE**

(57) Method for calibrating a terrestrial observation device (1) comprising a viewing member (3) defining a sight axis, a range finder (6) for determining a distance from a reference point being located on the sight axis, an orientation-measuring member (7) for measuring the orientation of the sight axis to determine a current orientation of the sight axis, a display unit (4) and an electronic processing unit (5). The method comprises the steps, commanded by the processing unit, of: displaying a mapping-image on the display unit, corresponding to a current position of the observation device; representing the current position and the sight axis from the current orientation on this mapping-image; having a user indicate, on the mapping-image, the reference point aimed at with the range-finder, and determining the position of the reference point indicated by the user on the mapping-image; and deducing from this, a correction parameter of the current orientation of the sight axis.

Terrestrial observation device for implementing that method.

**Fig. 1**

## Description

The present invention relates to determining the orientation of a sight axis.

BACKGROUND OF THE INVENTION

Terrestrial observation devices (i.e. used on Earth) are known, comprising an optical or optoelectronic viewing member, and a digital magnetic compass to determine the orientation of the viewing member with respect to a reference direction, generally the Earth geographic North direction determined from the magnetic North direction provided by the digital magnetic compass and the Earth magnetic declination which can be determined from the place and date of observation.

The digital magnetic compass is arranged to detect a magnetic field corresponding to the Earth's magnetic field, but is susceptible to two types of magnetic field disturbances, which lead to errors in determining the magnetic North direction. The first type of magnetic field disturbances, are hard magnetic disturbances, which relate to unwanted magnetic fields, e.g. from electromagnetic equipment within the observation device: the detected magnetic field is the superposition of the Earth's magnetic field and the disturbing magnetic fields. This electromagnetic equipment can be part of the observation device, for example an electrical supply of the observation device, or be external to the observation device. The second type of magnetic field disturbances, are soft magnetic disturbances, which relate to local deformations of the Earth's magnetic field, caused by ferromagnetic material present in the place of observation or within the observation device. A vehicle, metal parts of a bulletproof ballistic vest or a battery pack within the observation device can, for example, constitute such ferromagnetic material.

To parametrize and provide a compensation for these errors, known methods perform a calibration by taking several measurements of the magnetic field direction while moving the observation device or from multiple positions of the observation device as in document FR-A-2916839. However, such a compensation method is limiting and requires strict control to be effective. It is known to use addidional sensors to provide measurements independent from the magnetic field, making it possible to enhance magnetic compass error compensation by involving improved error models. Such sensors are, for example, a gravitational field sensor, a satellite positioning device (or GNSS - Global Navigation Satellite System), an inertial measurement unit, etc.

Moreover, observation devices are known, comprising a GNSS receiver and an electronic mapping unit, making it possible to display a map (mapping-image) on a screen, onto which a marker for the place of observation and lines indicating the sight axis are overlaid.

In the following text, the term mapping-image refers to any georeferenced aerial representation of a place, for example, a two-dimensional drawing, a three-dimensional drawing, an aerial photograph. The georeferencing (mapping-image registration) allows the transfer of geographic coordinates onto this mapping-image and allows to extract geographic coordinates from a position marked on this mapping-image.

In the following text, the term target refers to any element of the environment onto which the observation device is pointed.

AIM OF THE INVENTION

The invention, in particular, aims to improve the accuracy of measuring the orientation of the sight axis of an observation device.

SUMMARY OF THE INVENTION

To this end, the invention concerns a method for calibrating a terrestrial observation device comprising a viewing member defining a sight axis, a range finder for determining a distance from a reference point being located on the sight axis, an orientation-measuring member for measuring the orientation of the sight axis to determine a current orientation of the sight axis, a display unit and an electronic processing unit. The method comprises the steps, commanded by the processing unit, of: displaying a mapping-image on the display unit, corresponding to a current position of the observation device; representing the current position and the sight axis from the current orientation on this mapping-image; having a user indicate, on the mapping-image, the reference point aimed at with the range-finder, and determining the position of the reference point indicated by the user on the mapping-image; and deducing from this, a correction parameter of the current orientation of the sight axis.

Thus, it is made possible for the user to identify on the mapping-image image-positions of landmarks of the surrounding environment and to correct image-positions drawn on the mapping-image (the image-positions based on the corresponding geographic coordinates and the observation device measurements), from what he sees in his environment, so that the control unit can determine correction parameters for the observation device orientation measurement (orientation of the sight axis). It is therefore possible to compensate for the errors in measuring the orientation of the sight axis, by only using the sensors commonly present in a standard observation device.

The following optional features can be used individually or in combination:

the method comprises the step of representing, on the mapping-image, at least one limit of uncertainty of measuring the orientation of the sight axis;
the method comprises the step of representing, on the mapping-image, at least one angular limit of uncertainty of measuring the distance from the reference point;

the method comprises the step of indicating, to the user, on the mapping-image, a corrected current position of the observation device, and representing the sight axis on the map from the corrected current position;

the method comprises the step of correcting positions in the mapping-image to compensate for a non-orthogonal projection;

the method comprises the step of determining a non-orthogonal projection correction vector and of applying said vector to positions in the mapping-image;

the method comprises the step of identifying several reference points and deducing a correction parameter from the current orientation of the sight axis for each of the reference points;

the orientation-measuring member (7) comprises a digital magnetic compass.

The invention also concerns a terrestrial observation device for implementing that method.

Other features and advantages of the invention will emerge upon reading the description below of particular and non-limiting embodiments of the invention.

BRIEF DESCRIPTION OF THE DRAWINGS

Reference will be made to the accompanying drawings, among which:

[Fig. 1] figure 1 is a sketch illustrating an observation device for the implementation of the method of the invention, according to a first embodiment;

[Fig. 2] figure 2 is a view similar to figure 1, illustrating an observation device according to a second embodiment;

[Fig. 3] figure 3 is a view similar to figure 1, illustrating an observation device according to a variant of the first embodiment;

[Fig. 4] figure 4 is a flowchart illustrating a calibration process according to a first embodiment of the method according to the invention;

[Fig. 5] figure 5 is a flowchart illustrating a mapping correction subroutine of this calibration process;

[Fig. 6a] figure 6a is a flowchart illustrating a first part of a vector correction subroutine of this calibration process;

[Fig. 6b] figure 6b is a flowchart illustrating a second part of the vector correction subroutine of this calibration process;

[Fig. 7a] figure 7a is a representation of a map, which can be used as a mapping-image in the method of the invention;

[Fig. 7b] figure 7b is a representation of an aerial image, which can be used as a mapping-image in the method of the invention;

[Fig. 8] figure 8 is a representation of an aerial image, which can be used as a mapping-image in the method of the invention;

[Fig. 9a] figure 9a is another representation of an aerial image, which can be used as a mapping-image in the method of the invention;

[Fig. 9b] figure 9b is the representation of the aerial image of figure 9a with explanatory markings;

[Fig. 10] figure 10 is a flowchart illustrating a position correction subroutine of this calibration process;

[Fig. 11] figure 11 is a flowchart illustrating a position refinement subroutine of this calibration process;

[Fig. 12] figure 12 is a representation of a map, which can be used as a mapping-image in the method of the invention;

[Fig. 13] figure 13 is a flowchart illustrating a subroutine assisting with searching for identified reference points for this calibration process;

[Fig. 14a] figure 14a is a representation of a map, which can be used as a mapping-image in the method of the invention;

[Fig. 14b] figure 14b is the representation of an extraction of a part of the mapping-image of figure 14a;

[Fig. 15] figure 15 is a flowchart illustrating a calibration process according to a second embodiment of the method according to the invention.

DETAILED DESCRIPTION OF THE INVENTION

Below, the following are referred to:

- position for indicating the location where the observation device or a reference point is located;
- geolocation for referencing two-dimensional information making it possible to mark a position on the surface of the globe (geographic coordinates like latitude and longitude);
- geoposition for referencing three-dimensional information defining a three-dimensional position with respect to the globe (geographic coordinates like latitude and longitude and altitude with respect to a reference ellipsoid or geoid).

The method of the invention can be implemented by utilizing geolocations, in particular in the case where the geographic zone in question has only few altitude variations (for example a plain zone), or geopositions, in particular in the case where the geographic zone in question has significant altitude variations (for example a mountain zone or an urban zone with a high disparity of building heights).

In reference to the figures, the method according to the invention is implemented by means of an observation device, generally referenced by the numerical reference 1, which comprises a casing 2, which can be held by a user, containing a viewing member 3, 3' having an optical axis defining a sight axis of the observation device 1, a display unit 4 and an electronic processing unit 5 connected to the display unit 4.

The processing unit 5 comprises, for example, a processor and a memory containing at least one computer program which can be executed by the processor and data which can be used for executing the program (in particular, mapping data and a magnetic field model e.g. IGRF or WMM). The computer program comprises instructions arranged to implement the method of the invention. In particular, the computer program comprises a mapping module and geodetic calculations.

The observation device 1 also comprises a set of additional sensors connected to the processing unit 5. This set of additional sensors comprises a laser range finder 6 allowing for laser distance measurements on the sight axis, a digital magnetic compass 7, a satellite receiver 8, and an atmospheric pressure sensor 9.

The laser range finder 6 comprises an emitter for emitting laser pulses in the direction of a target T, towards which the sight axis of the observation device 1 is pointed, and a detector for detecting pulses reflected by the target T. By measuring the time between the emission of a pulse and the detection of the reflected pulse, the distance from the laser range finder 6 to the target T can be determined. The management of the parallax between the laser range finder 6 and the viewing member 3, 3' is known per se and will not be discussed here.

The digital magnetic compass 7 (or DMC), is known in itself and is arranged to detect a magnetic field corresponding to the Earth's magnetic field and to determine the orientation of the sight axis of the observation device 1, with respect to the direction of the Earth's magnetic field.

The satellite receiver 8 is arranged in a manner known in itself, to receive signals emitted by satellites of a satellite constellation of a global navigation satellite system (or GNSS, like GPS, GLONASS, GALILEO, BEIDU systems, etc.), and to calculate, from the signals received, the position (latitude, longitude, altitude) of the observation device 1.

The atmospheric pressure sensor 9 (DBPS, *Digital Barometric Pressure Sensor*), is arranged in a manner known in itself, to determine the surrounding atmospheric pressure, and to measure altitude differences with the observation device 1.

The observation device 1 also comprises a man/machine interface or MMI 10 which is mounted on the casing 2, and which is connected to the processing unit 5 to enable the user of the observation device 1 to send commands to the processing unit 5. The MMI 10 is known in itself, and comprises, for example, one or more buttons, even a keyboard, and/or one or more joysticks, and/or one or more control knobs, and/or a touchscreen, etc. In particular, the user commands a distance measurement from the laser range finder 6 e.g. by pressing a button of the MMI 10.

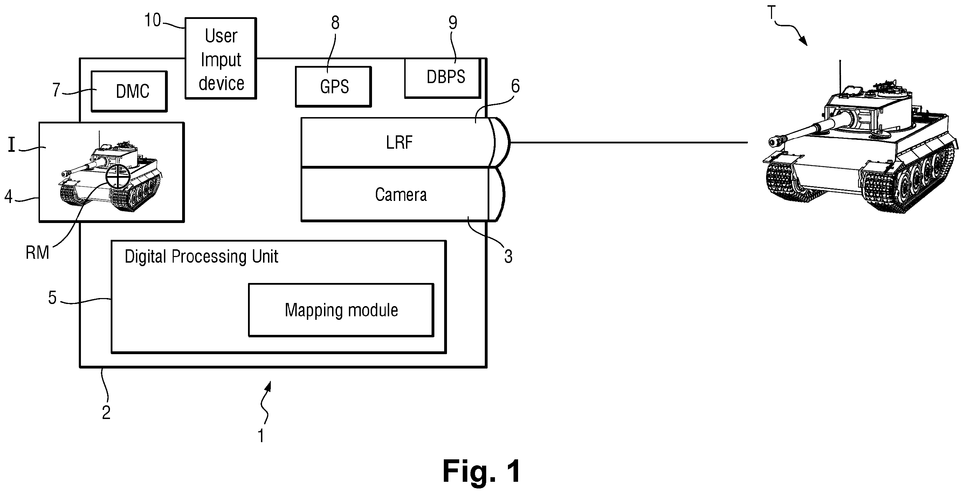

In reference to figure 1, and according to the first embodiment of the invention, the viewing member is optronic and comprises a camera 3 having a photosensitive sensor connected to the processing unit 5 and the display unit 4 which can be viewed by the user through an opening of the casing 2.

In operation, the user points the observation device 1 towards a target T by looking at the images I captured by the camera 3 on the display unit 4, and then commands a distance measurement from the laser range finder 6 by pressing the button of the MMI.

To indicate where the laser range finder 6 is pointed, a reticle, or reticle marker, is preferably presented to the user on the display unit 4. The reticle (or reticle marker) position is fixed and displayed at about the center of the images I displayed by the display unit 4.

Simultaneously, the digital magnetic compass 7 determines the orientation of the sight axis with respect to the magnetic North.

The satellite receiver 8 provides the position of the observation device 1, the altitude of this position being optionally corrected from the pressure difference information (with respect to an altitude reference point) provided by the atmospheric pressure sensor 9.

From the position provided and from the date, the processing unit 5 determines the magnetic declination (e.g. from a world magnetic field model, such as IGRF or WMM) and determines the orientation of the sight axis with respect to the geographic North.

To measure the altitude of a remote target T, an additional sensor can be disposed in the observation device 1, to measure the direction of the gravity field vector, in order to determine the inclination of the observation device 1 with respect to the vertical. Alternatively, gravity field vector sensors can be integrated into the digital magnetic compass 7. This is known per se, and will not be more detailed for the time being.

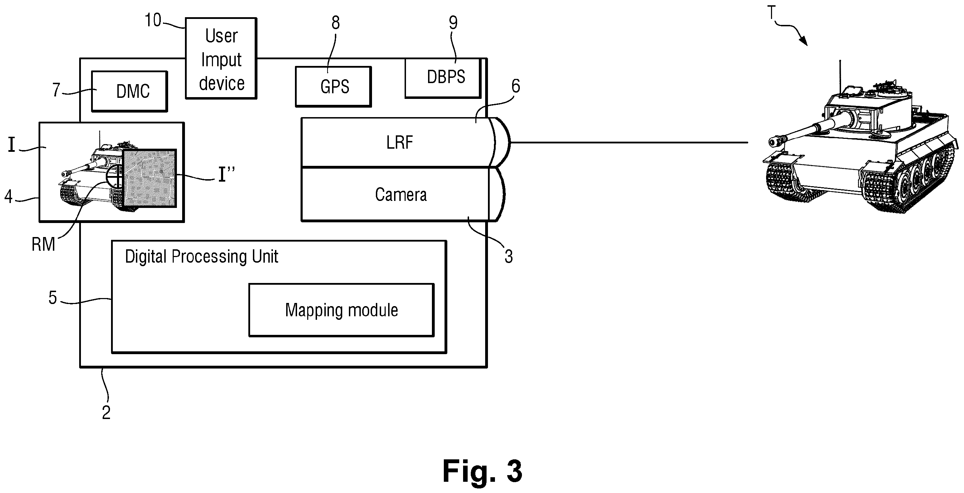

In the variant of the first embodiment illustrated in figure 3, the processing unit 5 is programmed to insert images I'' in the images I captured by the camera 3 and displayed by the display unit 4. This image overlay method (or PIP, *Picture in Picture)* is known in itself.

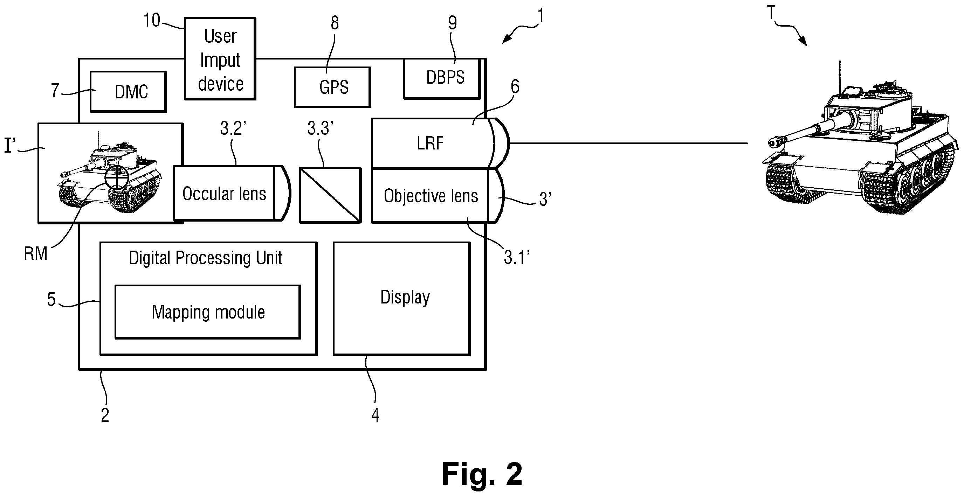

In the second embodiment represented in figure 2, the viewing member is optical and comprises, in this case, a telescope 3'. The telescope 3' comprises an optical assembly comprising an objective lens 3.1' and an ocular lens 3.2', which are each disposed in an opening of the casing 2. The optical assembly further comprises a beamsplitter 3.3' between the objective lens 3.1' and the ocular lens 3.2' to define a first optical transmission path from the objective lens 3.1' to the ocular lens 3.2' and a second optical path from the display unit 4 disposed facing the beamsplitter 3.3' to the ocular lens 3.2', such that the images presented by the display unit 4 can be perceived by the user overlaid on the images I' of the scene that he observes through the ocular lens 3.2'. In a variant in this second embodiment, the display unit 4 is a semi-transparent display unit adjacent to the ocular lens 3.2' to display information, which can be seen by the user when he observes a scene by the ocular lens 3.2'.

The basic operation of the observation device 1 according to the second embodiment is identical to that of the first embodiment.

To accurately indicate where the laser range finder 6 is pointed, a reticle marker RM is preferably presented to the user. The reticle marker RM is fixed and displayed at the center of the display unit 4. Alternatively, the reticle can be implemented as a laterally structured (e.g. etched or coating) plane glass surface (structured glass plate or glass prism or structure cemented from such) in the optical path of the telescope.

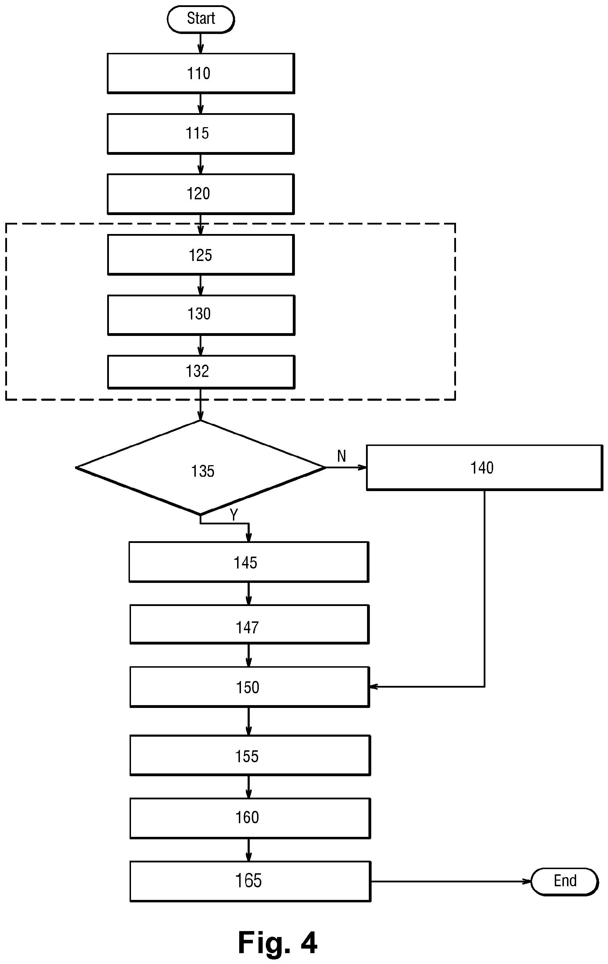

In these two embodiments, the user and/or the processing unit 5 can decide to start a calibration process of the digital magnetic compass 7. This calibration process is implemented by the program executed by the processing unit 5. An embodiment of this calibration process, more specifically intended for the calibration of the magnetic declination from one single reference point, is illustrated in figure 4 and has the general reference 100. The user of the observation device 1 can command the processing unit 5 to perform this calibration if it detects a drop in accuracy in determining the orientation of the sight axis or if it follows a pre-established maintenance schedule; the processing unit 5 can itself decide to perform this calibration, for example, upon starting the observation device 1 or according to a pre-established maintenance schedule.

In the example described and illustrated in figure 4, the user commands the execution of the calibration process via the MMI 10 (step 110).

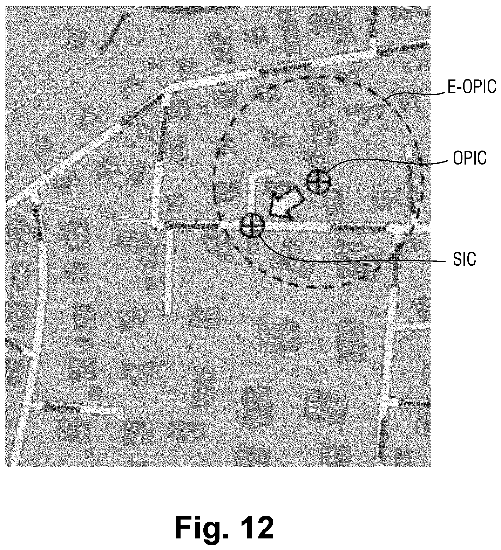

The processing unit 5 measures the own-position (step 115) e.g. provided by the GNSS satellite receiver and commands the displaying on the display unit 4 of a mapping-image corresponding to the own-position (step 120). The mapping-image is used to identify the own-position in the image and to correct the own-position. This is called OP refinement below (steps 125,130,132). In the figure 12 a map is depicted as an example for a mapping-image. Here the own-position is the OPIC cross-marker which is surrounded by the E-OPIC circle corresponding to the own-position measurement error estimation.

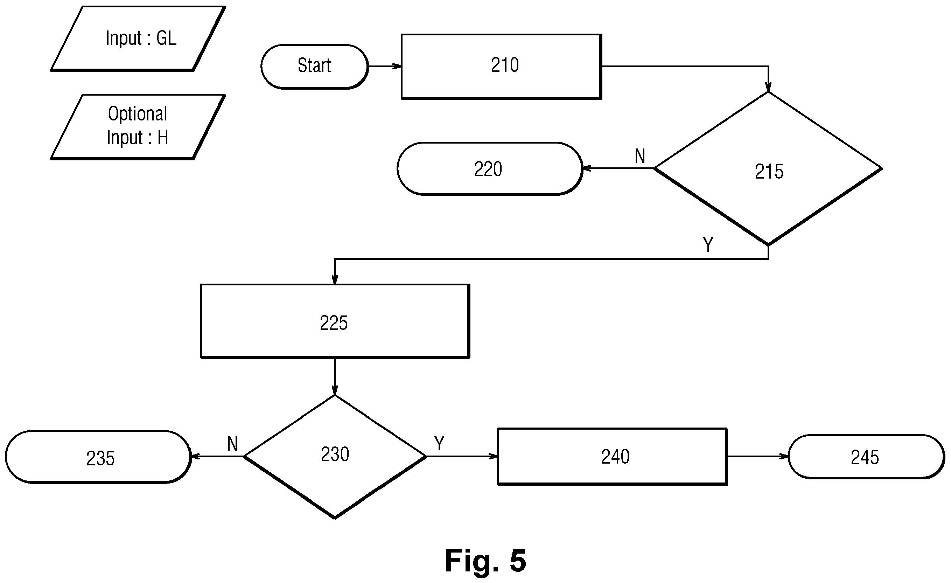

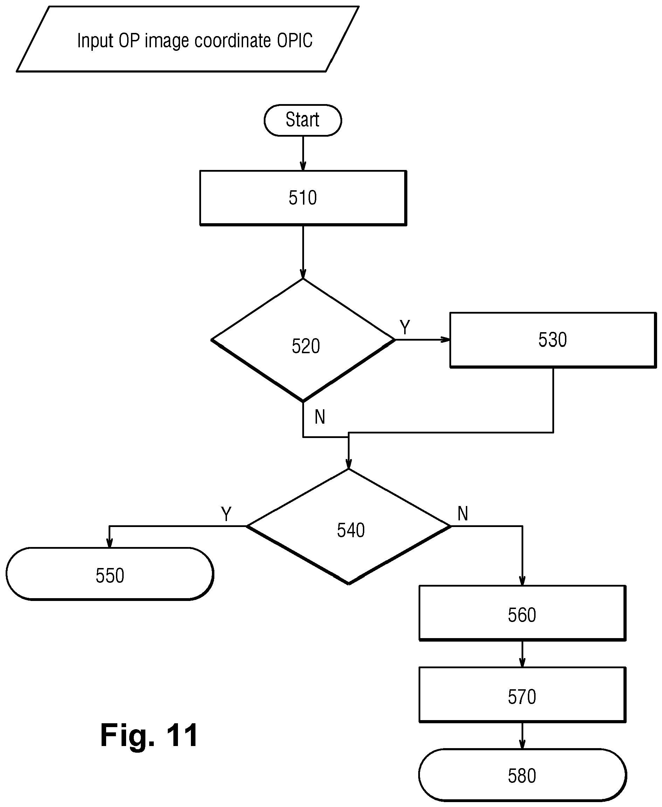

The mapping-image presented to the user can include non-orthogonal projections, at least for parts of the data. Presenting raw image positions to the user (calculated from geolocations with respect to the ground-level of the mapping-image i.e. without considering that the own-position is raised above ground-level) will lead to a poor correspondence between the positions drawn on the mapping-image and the actual content of the scene which can be perceived by the user. To this end, the processing unit 5 executes a mapping correction subroutine CIC to correct the image coordinates (mapping-image) of the own-position in order to consider non-orthogonal projections in said mapping-image (step 125). This mapping correction subroutine CIC will be described below using figure 5. The corrected image coordinates of the own-position are then marked in the mapping-image, for example in the form of a superposed marker. In step 130 the processing unit 5 executes a position refinement subroutine (OPR) allowing the user to refine the own-position in the mapping-image. The own-position refinement subroutine OPR will be described in more detail in relation to figure 11.

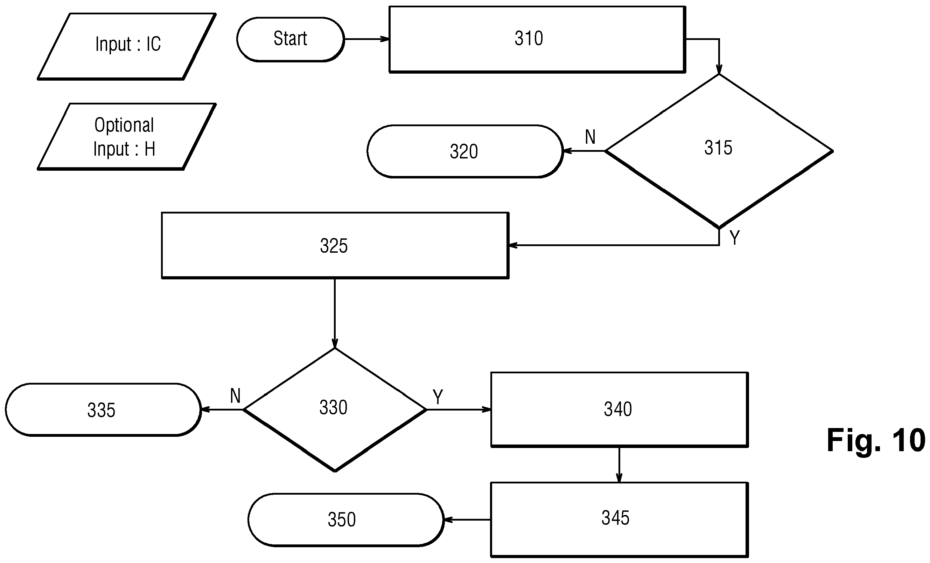

The processing unit 5 then calculates the corrected geolocation from the correct own-position marked on the map by executing a position correction subroutine called CGL (step 132). Image coordinates are referred to, as said coordinates are determined from the mapping-image. The position correction subroutine CGL, which will be described below in relation to figure 10, results in a corrected geolocation OPGL for the own-position OP.

It is understood that steps 125, 130 and 132 make it possible to refine the own-position OP of the observation device 1.

The processing unit 5 then requests from the user if he is able to identify, in the vicinity observed with the observation device 1, a reference point corresponding to a point on the mapping-image (step 135). This reference point can be a part of a building or of a raised part, or any noteworthy topographic element (landmark), i.e. which can be recognized both in the observed scene and in the mapping-image.

If identifying step 135 is possible, the processing unit 5 passes to step 145; if not, it continues to step 140.

In step 145, the user selects the point identified (reference point RP) on the mapping-image.

The coordinates of the reference point RP selected on the mapping-image are calculated and corrected by executing the position correction subroutine CGL (step 147) to obtain a corrected position RPGL of the reference point RP. The position correction subroutine CGL is the same as that executed during step 132 and will be described below using figure 10.

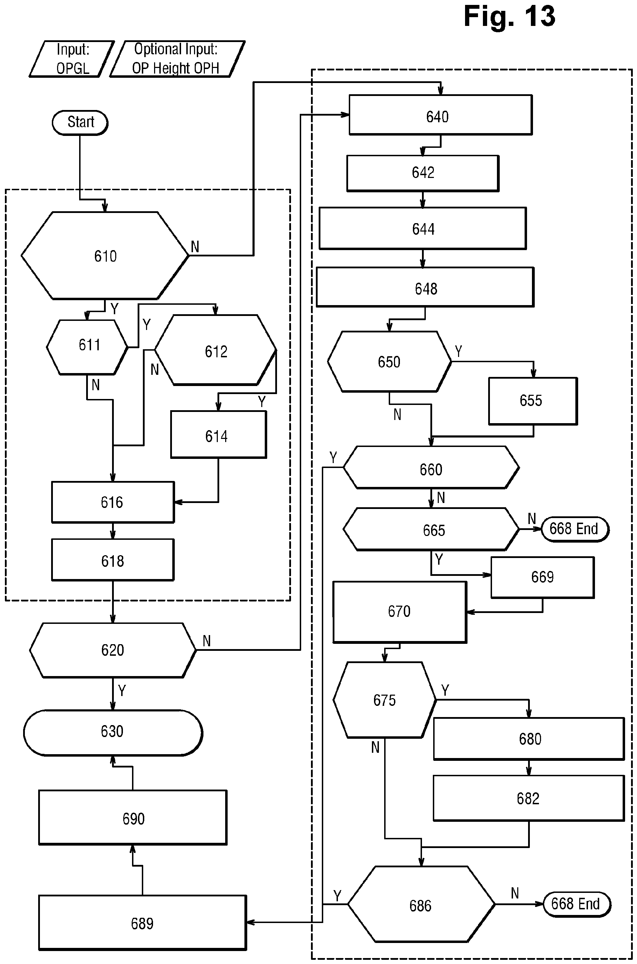

If identifying step 135 is not possible, a subroutine for assisting with searching and identifying reference points is executed (step 140). This subroutine, which will be described below in reference to figure 13, results in a corrected geolocation RPGL for a selected reference point RP, which can be identified by the user in his close environment.

In both cases (of step 135), the calibration process 100 is continued in step 150 during which the processing unit 5 calculates, from the positions OPGL and RPGL, the geographic azimuth angle of the direction from own-position OP to the reference point RP.

The user orients the observation device 1, such that the sight axis is pointed towards the reference point RP (step 155), then the processing unit 5 measures the orientation of the sight axis with respect to the magnetic North with the digital magnetic compass 7 which provides the magnetic azimuth angle of the sight axis from the own-position OP to the reference point RP (step 160).

The processing unit 5 thus calculates the magnetic declination as the difference between the geographic azimuth angle and the magnetic azimuth angle (step 165).

With the calibration request of the user thus being satisfied, the calibration process 100 ends and is repeated when another calibration request is received in step 110.

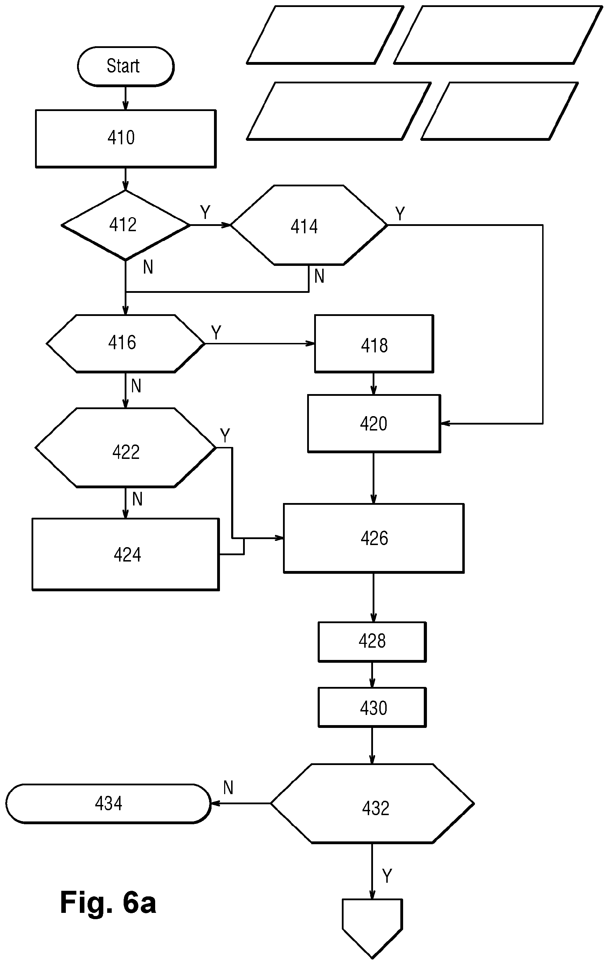

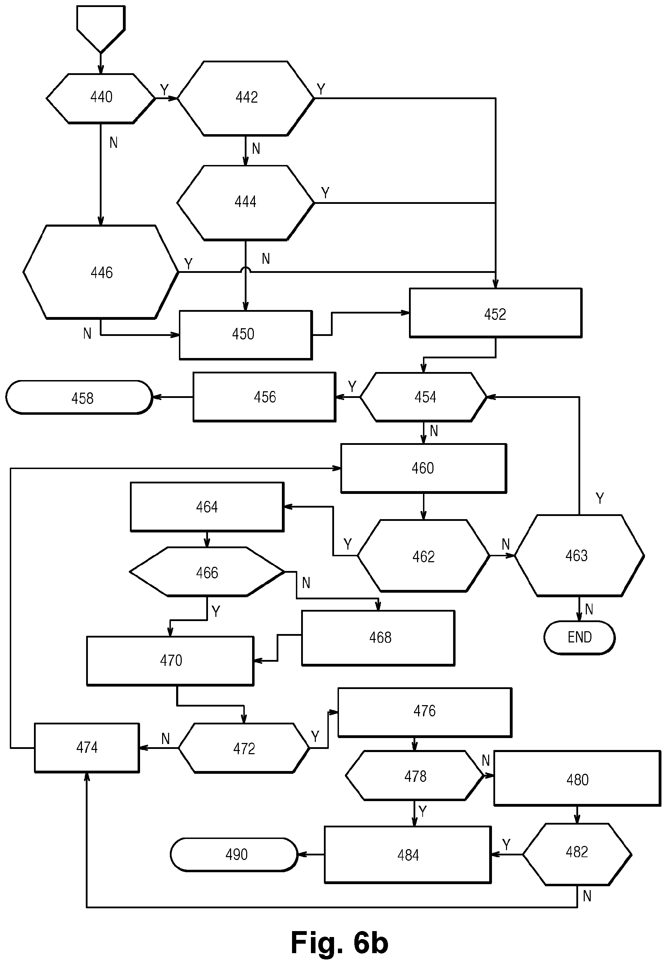

In reference to figures 5, 6a, 6b, the mapping correction subroutine CIC, which corrects the image coordinates for a non-orthogonal projection in the mapping-image will now be described.

The corrected mapping-image coordinates allow improving the correspondence between the position drawn in the mapping-image and the actual content of the mapping-image, which makes it possible for the user to identify, more easily, the points on the mapping-image.

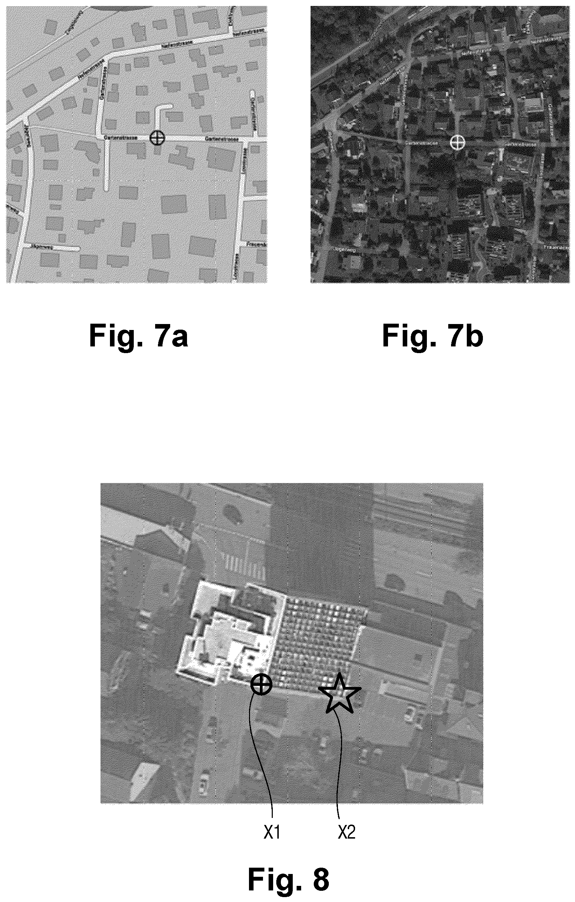

A map has been represented in figure 7a, and an aerial image has been represented in figure 7b. A problem arises with mapping-images including non-orthogonal projection, which is quite common in aerial images like that of figure 8. A high building having an upright front can be seen in figure 8. The front can be seen only due to the deviation of the imaging projection axis from vertical (this front is pierced with a multitude of windows): the vertical edges of the building can be seen on the aerial image only due to non-orthogonal projection during image capture. If a user located on the roof of the building (mapping-image position X1), measures his own-position, for example using the satellite receiver 8 and calculates the projected position within the mapping-image (from mapping-image registration), the calculated position will be position X2. The mapping-image registration is the process of transforming different sets of data into one coordinate system. It allows to calculate a point's mapping-image coordinate from the point's geolocation (longitude, latitude), if the point is at ground-level (height above ground = 0). The height (altitude) of the ground-level (with respect to a reference geoid) is given with the mapping-image registration. If the height of the observer (height above the mapping-image terrain/ground level) is known, a correction can be calculated, based on the position X2 and based on the flight data of the aerial image. The correction applied to the position X2 allows determining the corrected mapping-image position of the user in X1. The corrected position X1 can be presented to the user and if further correction is needed, X1 can be manually corrected by the user, as will be seen below.

The mapping correction subroutine CIC starts with at least the geolocation GL of the input point, which shall be drawn on the mapping-image. The height H (e.g. with respect to a reference geoid) of the input point is optional input data.

The first step 210 (figure 5) of the mapping correction subroutine CIC consists, for the processing unit 5, of calculating the non-corrected image vector GPIC (non-corrected image coordinates), i.e. the image coordinates of the input point, if it would be located at ground-level. This is calculated from the geolocation and the mapping-image registration data. Data may be photographs, measurements from different sensors, times, depths, or viewpoints.

In following step 215, the processing unit 5 determines, from the recorded data of the mapping-image (namely: the map registration data used for drawing the map; or the flight data in the case of an aerial image, i.e. the flight path, the flight height above ground, the aerial camera pose and the calibration of the camera), if the actual used mapping-image includes non-orthogonal projections. The recorded data of the mapping-image allow to calculate a point's mapping-image coordinate from the point's geolocation (longitude, latitude) for points of arbitrary height. If, on the other hand the height of the point is the ground-level height then the mapping-image registration is sufficient for the coordinate calculus and the "recorded data of the mapping-image" is not needed.

If not, the mapping correction subroutine CIC ends in step 220 by using the non-corrected image vector GPIC as the output of the mapping correction subroutine CIC, such that the corrected image coordinate is the initial image coordinate.

If so, i.e. if the actual used mapping-image includes non-orthogonal projections, the processing unit 5 executes a vector correction subroutine NOPCV (step 225) to calculate the correction vector NOPCV in image coordinates. This vector correction subroutine NOPCV will be described below in reference to figures 6a and 6b.

The processing unit 5 decides on the continuation of the mapping correction subroutine CIC according to the result of the vector correction subroutine NOPCV (step 230) .

If determining the correction vector NOPCV has not succeeded, the non-corrected image vector GPIC is used, such that the corrected image coordinate is the initial image coordinate and the mapping correction subroutine CIC finishes in this step 235.

If determining the correction vector NOPCV has succeeded, the processing unit 5 calculates the corrected image coordinate CIC by adding the correction vector NOPCV to the non-corrected image vector GPIC (step 240) and the mapping correction subroutine CIC ends with the output of the corrected image coordinate CIC (step 245).

The calibration process 100 uses the mapping correction subroutine CIC directly in step 125 to draw the own-position of the observation device 1 on the mapping-image, and also to correct the drawing of the reference points on the mapping-image as will be seen in relation to figure 13).

Calculating the correction vector of the non-orthogonal projection NOPCV will now be described in relation to figures 6a and 6b.

The inputs of the calculation of this vector are the geolocation GL of an input point (either the own-position of the observation device 1; or the position of the reference point) and the non-corrected mapping-image coordinates IC of this point. A third input, MINCL, is the minimum correction length. Corrections less than this distance on the mapping-image are not applied. In the absence of additional requirements, this value can be fixed at a constant value, for example, 1 pixel. A fourth input, which is optional, is the local height H of the input point (obtained, for example, by the position GNSS if the input point is the own-position).

The calculation operation of the correction vector NOPCV starts with step 410 (figure 6a), wherein the processing unit 5 determines, from the mapping-image registration, the height HMT (e.g. with respect to a reference geoid) of the mapping-image ground-level.

In step 412, the processing unit 5 verifies if the input point height H is available and, if so, if the error on the height H is acceptable (step 414).

The following steps up to step 426 determine the rough height of the geoposition of the input point and calculate the rough height above the mapping-image ground-level CHAM.

If the local height H is provided in the input data and if the height error is acceptable, the calculation operation of the correction vector NOPCV is continued directly in step 420. However, if one of these two conditions is not fulfilled, the calculation operation of the correction vector NOPCV is continued in step 416.

During step 416, the processing unit 5 determines if the mapping data around the geolocation GL comprise a digital terrain model DTM or a digital surface model DSM from which the local height H of the ground (or of the building) can be determined. If so, the processing unit 5 determines the local height H (step 418) and passes to step 420.

In step 420, the processing unit 5 calculates the height CHAM (input point rough height above mapping-image ground-level) by subtracting the height HMT of the mapping-image ground-level from the input point height H, that is CHAM = H - HMT, and continues with step 426.

If the decision taken in step 416 is negative, the processing unit 5 requests from the user if he is able to enter a value for the height CHAM by using the MMI 10 (step 422) .

If so, the value is entered and the sub-function is continued in step 426.

If not, the processing unit 5 derives an upper estimation for the CHAM from statistics of the mapping-image (step 424) and continues with step 426. For example, for the height CHAM, the maximum height of the buildings in the region can be used.

In step 426, the processing unit 5 has the height CHAM, which is a rough estimation of the input point height above the mapping-image ground-level. The processing continues with step 428.

In step 428, the height of the input point above the ground CHAM is used with the recorded data of the mapping-image to calculate a first estimate of the correction vector NOPCV.

The processing unit 5 then compares the correction vector NOPCV with the input MINCL (step 430).

If, in step 432, the estimated length of the correction vector NOPCV is less than the minimum correction length MINCL, no correction is necessary and a zero vector is used as a correction vector NOPCV (step 434) and the calculation operation of the correction vector NOPCV is ended.

If, on the contrary, in step 432 the non-orthogonal projection correction must be performed, then it is necessary to calculate the corresponding vector NOPCV. To provide this, the input point height above ground-level has to be determined more accurately (HAM).

This is done in steps 440 to 490 of figure 6b.

The processing unit 5 starts by deciding if the input point is, or not, an own-position OP (step 440).

If so, the processing unit 5 requests from the user if a measurement to the ground-level by means of the laser range finder 6 is possible, for determining the height of the own-position above ground-level HAM (step 442). If this is possible, the measurement is performed by the user and recorded by the processing unit 5, which passes to step 452. On the contrary, the processing unit 5 passes to step 444, wherein the processing unit 5 requests from the user if a measurement of the local atmospheric pressure using the atmospheric pressure sensor 9 can be used to determine the height of the own-position above mapping-image ground-level HAM. If the user indicates that the measurement is possible, the measurement is performed by the user and recorded by the processing unit 5, which passes to step 452. If such a measurement is not possible, the processing unit 5 passes to step 450.

If the input point is not an own-position (step 440), the input point is a reference point (like the target T), and the processing unit 5 continues to step 446.

In step 446, the processing unit 5 requests from the user if a measurement of the position of the reference point (for example, a measurement of the target location device) can be used to determine the height HAM. If the decision is positive, the measurement is performed and recorded by the processing unit 5, which passes to step 452. On the contrary, the processing unit 5 passes to step 450.

In step 450, the rough height CHAM already estimated is used as height HAM and the processing unit 5 passes to step 452.

The processing unit 5 continues with step 454, wherein it verifies if the recorded data of the mapping-image are available and sufficiently accurate.

If the recorded data are available and sufficiently accurate, the processing unit 5 calculates the correction vector NOPCV from the height HAM and from the recorded data (step 456) and ends with providing said correction vector NOPCV as result (step 458). It is noted that if the actual used mapping-image is a map (and not an aerial image) and includes non-orthogonal projection, the map probably is derived from an aerial image and the recorded data comprise flight data, which could be used for calculating the correction vector NOPCV.

If the recorded data of the mapping-image is not available, or if the data does not meet the desired accuracy requirements, the processing unit 5 starts an estimation of the correction vector NOPCV from a close vertical object (step 460).

The processing unit 5 requests from the user if a close vertical object (CVO) can be identified on the mapping-image (step 462). If this is not the case, the processing unit 5 requests from the user, in step 463, if the accuracy requirement of step 454 can be relaxed and, if so, continues the calculation in step 456. If the accuracy requirement cannot be relaxed, the vector correction subroutine NOPCV ends without success.

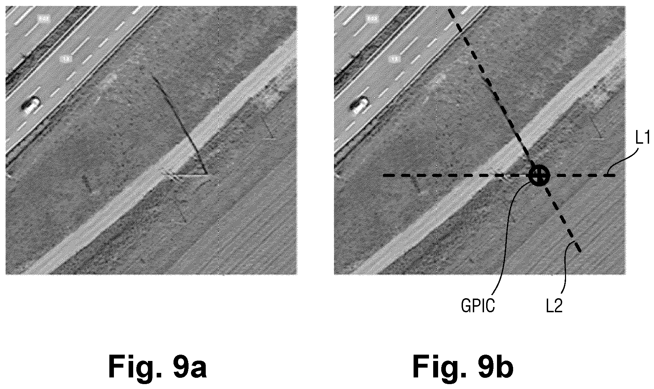

If a close vertical object CVO can be identified on the mapping-image by the user (a close vertical object has been represented in figures 9a, 9b, namely, in this case, an electrical pole), the processing unit 5 validates that a close vertical object CVO can be identified on the map (step 464) and requests from the user if the height HCVO of the close vertical object CVO is known (step 466).

If the height HCVO is known, the user enters it in step 466 by means of the MMI 10 and the processing unit 5 then passes to step 470. On the contrary, the processing unit 5 passes to step 468, wherein it is requested from the user to proceed with a triangulation measurement and/or a measurement by means of the laser range finder 6 to determine the height HCVO of the close vertical object CVO. Once the measurement is recorded, the processing unit 5 passes to step 470.

In step 470, it is requested from the user to select the upper end TPIC of the close vertical object CVO in the mapping-image (coordinates of the image, vector of the image TPIC), and the processing unit 5 verifies if the selection is made (step 472).

If the user has not been able to make the selection, the processing unit 5 proposes to the user to proceed with selecting a new close vertical object CVO (step 474) and the processing unit 5 goes back to step 460.

If the selection of the upper point TPIC of the close vertical object CVO is successful (step 472), the processing unit 5 requests from the user to select, in the mapping-image, the point at the ground GPIC of the close vertical object CVO (step 476).

If (step 478) the selection of the point at the ground GPIC is successful, the processing unit 5 has two image vectors TPIC and GPIC, and the corresponding height difference HCVO. In this case, the processing unit 5 continues to step 484.

If the selection of the point at the ground GPIC is not successful, the processing unit 5 performs two line fits, the result represented by the lines L1, L2 in figure 9b and the intersection of the two lines L1, L2 is used as an estimate of the point at the ground GPIC (step 480) : the point at the ground GPIC of the close vertical object CVO is at the intersection of the line L1 extending from the ground to the top of the close vertical object and of the line L2 along the shadow projected on the ground by the close vertical object CVO.

If the estimate of the point at the ground GPIC is not successful (step 482), the processing unit 5 goes back to step 474 to request from the user to select a new close vertical object CVO, then restarts the calculation in step 460.

If the estimate of the point at the ground GPIC is successful (step 482), the processing unit 5 has two image vectors TPIC and GPIC and the corresponding height difference HCVO and the processing continues in step 484.

In step 484, the difference vector GPIC->TPIC is scaled from the height HCVO to the height HAM, which is a good approximation of the correction vector NOPCV, if the change of the correction vector between the input point position and the close vertical object CVO position can be neglected. The processing unit 5 then returns the correction vector NOPCV to the calibration process (step 490) .

The idea of estimating the correction vector NOPCV for a geoposition by calculating the correction vector NOPCV at a close-by geoposition, where the difference in correction vector NOPCV can be disregarded, is also the base of the position correction subroutine CGL (corrected geolocation GL from the mapping-image coordinates) which is used in the process 100 in step 132.

The position correction operation CGL, illustrated in figure 10, allows calculating a corrected geolocation (by non-orthogonal projection) for a given image coordinate IC.

The position correction subroutine CGL starts with a coordinate IC of an input point in the mapping-image and, as an optional input, the corresponding height H of this point.

The processing unit 5 starts by calculating the geolocation of a point (non-corrected geolocation NCGL) at ground-level, which would have the mapping-image coordinate IC. This is calculated from the mapping-image registration (step 310).

In step 315, the processing unit 5 determines, from recorded data of the mapping-image, if the mapping data includes non-orthogonal projections. If this is not the case, the processing unit 5 uses the non-corrected geolocation NGCL for the output geoposition CGL (step 320) . If, on the contrary, the mapping data includes non-orthogonal projections, the vector correction operation NOPCV is used to calculate the correction vector NOPCV in image coordinates (step 325) from recorded data of the mapping-image as described in relation to figures 6a and 6b.

If determining the correction vector NOPCV in step 325 has not succeeded (step 330), the non-corrected geolocation NGCL is used for the output geolocation CGL and the correction operation CGL ends in step 335.

On the contrary, if determining the correction vector NOPCV in step 325 has succeeded (step 330), the image vector of the point at ground-level GPIC is calculated by subtracting the correction vector NOPCV from the non-corrected image coordinate IC (step 340) and the processing unit 5 continues to step 345.

In step 345 from the GPIC image vector (and the mapping-image registration) the geolocation is calculated, which is the corrected geolocation CGL for the input point IC.

The correction subroutine ends by returning the corrected geolocation CGL (step 350).

The calibration process 100 described in figure 4, calls a subroutine for refining the own-position in step 130. For the own-position refinement subroutine see figure 11.

The own-position refinement subroutine OPR starts with the input of an own-position image coordinate OPIC.

During the first step 510, the own-position image coordinate OPIC is drawn on the used map (the map has been drawn e.g. in step 120 of figure 4). This is marked by a cross surrounded by a black circle in figure 12.

During step 520, the processing unit 5 decides if an estimate of the error for the own-position image coordinate OPIC is available. For example, it can be calculated from the GNSS system error estimation and converted to mapping-image distances by applying mapping-image registration. In the absence of an error estimate, the processing unit 5 continues with step 540.

If the estimate of the error is available, the processing unit 5 (in step 530) draws a circle on the mapping-image with the corresponding error radius, as indicated in a dotted line (E-OPIC) in figure 12, and passes to step 540.

In step 540, the processing unit 5 requests from the user if the own-position image coordinate OPIC represented is plausible or must be corrected. It is by comparing the position OPIC with the mapping-image and his environment that the user can decide on this.

If the own-position image coordinate OPIC is plausible, the processing unit 5 returns the non-corrected own-position image coordinate OPIC as the output of the position refinement subroutine OPR which ends in step 550.

If the own-position image coordinate OPIC is not plausible, it is requested from the user to correct the own-position image coordinate OPIC by selecting a new position image coordinate SIC in step 560, for example, by moving a pointer to the correct position on the mapping-image by means of the MMI 10.

In following step 570, the processing unit 5 draws the selected position image coordinate SIC on the map and continues with step 580, wherein the image coordinate SIC selected is used as a corrected output of the position correction subroutine OPR.

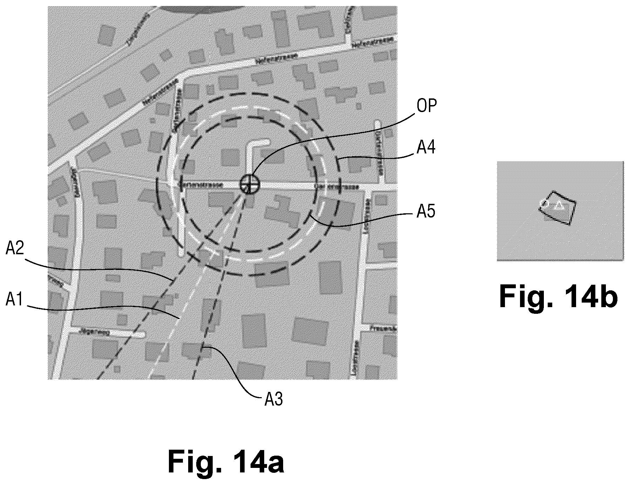

The calibration process 100 described in figure 4, that has been seen, calls on, in step 140, an assisted search and identification subroutine (SRF), which will now be described in relation to figures 13, 14a and 14b.

The assisted search and identification subroutine SRF starts in step 610 (figure 13) with the input OPGL which is the geolocation of the own-position OP. The optional input is the height OPH of the own-position. The result of the subroutine SRF will be a reference point RP with the corrected geolocation RPGL and the user can direct the observation device 1 towards this reference point, for example in figure 4 in step 155.

In step 610, the processing unit 5 decides for a vicinity of the geolocation OPGL, if there are candidates for the reference points from a database which can form part of the recorded mapping data in the processing unit 5.

If the decision is negative, the strategy consisting of reference points from a database is not possible and the second strategy "assist with searching for reference points by DMC and LRF" will be started in step 640. DMC means a measurement by the digital magnetic compass 7 and LRF means a measurement by the laser range finder 6.

If the decision taken in step 610 is positive, the processing unit 5 has found at least one candidate reference point and the assistance subroutine is continued in step 611, wherein the processing unit 5 determines if the height of the own-position height OPH is available from the input. If so, the following step is step 612, otherwise the following step is step 616.

In step 612, the processing unit 5 determines if an height model (for example, a digital terrain model DTM or a digital surface model DSM of the vicinity of the own-position OP) is available from the mapping module. If the decision is positive, the processing unit 5 passes to step 614; if it is negative, the processing unit 5 passes to step 616.

In step 614, the visibility (from the own-position) of each candidate reference point is verified. If a candidate reference point (found in step 610) is concealed for the observation device 1 by surrounding terrain/buildings, the processing unit 5 removes the candidate reference point and passes to step 616.

In step 616, the processing unit 5 corrects the positions of the remaining reference points using the mapping correction subroutine CIC (described in detail in relation to figure 5).

The processing unit 5 then draws the corrected positions of the reference points onto the mapping-image (step 618), for example, in the form of image superposition markers.

In step 620, the processing unit 5 requests from the user to decide if he is able to identify a reference point in the field of view of the observation device 1, to point the observation device 1 on the reference point using the viewing member 3, 3'.

If the decision of step 620 is positive, the correct geolocation of the targeted reference point can be determined from the database of the reference points and the assisted search and identification subroutine ends by returning the identified reference point RP to the process 100 (the user can orient the observation device 1 towards the reference point) and the correct geolocation RPGL of the reference point is provided. The SRF subroutine ends then in step 630 and the result RPGL.

If the decision taken in step 620 is negative, the second strategy for assisting with searching for reference points "assist with searching for reference points by DMC and LRF" is started in step 640, wherein the processing unit 5 requests from the user to direct the observation device 1 towards a landmark point in the vicinity (reference point RP).

The processing unit 5 then performs a measurement of the orientation of the sight axis (i.e. the direction from OP to RP) with respect to the magnetic North provided by the digital magnetic compass 7 (step 642), then calculates the orientation of the sight axis with respect to the geographic North by using the magnetic declination (of rough accuracy) of a world magnetic field model, such as IGRF or WMM (step 644).

The calculation unit 5 draws a beam with the calculated orientation on the mapping-image, the origin of the beam being the position OP on the mapping-image (step 648). Such a beam is represented in A1 in figure 14a.

In following step 650, the processing unit 5 determines if an estimate of the orientation error is available from the digital magnetic compass 7. If so, the estimate of the error is used in step 655 to calculate the two limiting directions of the confidence region for measuring the direction and draw on the mapping-image, the two limiting beams A2, A3 corresponding to the confidence region of the orientation measurement by the digital magnetic compass 7, for example in the form of superposition as in figure 14a. The processing continues with step 660.

If the decision taken in step 650 is no, the processing unit 5 passes to step 660, wherein it requests from the user to decide, if he is capable of identifying the landmark/reference point RP on the mapping-image using the drawn beams A1, A2, A3.

If the response in step 660 is positive, the processing unit 5 continues with step 689; otherwise with step 665.

In step 689, the processing unit 5 requests from the user to select the position of the reference point RP in the mapping-image and passes to step 690.

In step 690, the processing unit 5 uses the selected image coordinate to calculate the corrected geolocation RPGL for the reference point RP using the correction subroutine CGL (corrected geolocation GL from the image coordinate). The correction operation CGL has already been described using figure 10. Then, the SRF subroutine ends with step 630 and the result RPGL.

If the response in step 660 is negative, assisting with searching and identifying using a DMC measurement is not sufficient to enable the user to identify the reference point on the mapping-image.

In step 665, the processing unit 5 requests from the user if an LRF measurement can be performed to reinforce the identification.

If the decision is negative, the subroutine assisting with the search and the identification ends without success in step 668 and the user can, for example, change position and then restart the entire calibration process 100.

If the decision taken in step 665 is positive, the processing unit 5 commands an LRF measurement from the laser range finder 6 to the reference point (step 669).

In step 670, the processing unit 5 calculates the geoposition of the reference point from the own-position OP and the measurements DMC and LRF.

The geoposition of the reference point is used by the processing unit 5 to draw the rough position of the reference point on the map.

During step 675 which follows, the processing unit 5 requests from the laser range finder 6 if an estimate of the error LRF is available (for example, from the intensity of the received LRF laser signal).

If the decision is negative, the processing unit 5 requests, that the user decides if the reference point can be identified on the mapping-image (step 686).

If the decision is positive, the processing unit 5 continues to step 680 and uses the estimate of the LRF error to draw one error circle or two concentric error circles (A4, A5) around the own-position on the mapping-image, which limits the LRF confidence region, as indicated in a dotted line in figure 14a (A4, A5).

In following step 682, the processing unit 5 intersects the confidence region DMC with the confidence region LRF and highlights the intersection of the regions for the user in order to assist him in identifying the reference point on the map, as illustrated in figure 14b.

In step 686, the processing unit 5 requests from the user if the reference point can be identified on the mapping-image.

If the decision is negative, the assisted search and identification subroutine SRF ends without success in step 688, like above in step 668.

If the decision in step 686 is positive, the processing unit 5 requests from the user to select the position of the reference point on the mapping-image (step 689). The position of the selected mapping-image IC is used to calculate the corrected geolocation RPGL (step 690) using the correction operation CGL (corrected geolocation from image coordinates) which has been described in relation to figure 10.

After step 690, the assistance subroutine ends in step 630 with the reference point as the identified reference point RP with the corrected geolocation RPGL.

It must be noted that, if other measurements of the local magnetic declination are performed, the local magnetic declination can be stored with the geolocation by the mapping module. A set of these measurements can subsequently be used to generate the local magnetic declination angle for new observer positions by interpolating or extrapolating the stored local magnetic declination angles.

The magnetic declination can be combined with other information, for example, the meridian convergence angle, which allows obtaining the grid magnetic angle GMA to facilitate the use of projected coordinates as Universal Transverse Mercator (UTM).

If topographic information is available, for example a digital terrain model DTM or a digital surface model DSM or a GIS mesh model, the mapping module can decide, if potential reference points can be seen and present a filtered selection to the user.

An extension of the calibration process 100 preselects the reference points based on multispectral/-hyperspectral aerial image data, in order to classify the reference points. The classification can be linear or non-linear, a non-linear classification preferably using an artificial neural network.

With one single reference point, for the DMC processing, only the local magnetic declination can be determined. However, the single high-accuracy reference point can be used at the same time to determine the correction parameters for other sensors of the observation device 1.

For example, an orientation-measuring member can be added to the observation device 1, which is based on the merging of a digital magnetic compass with an inertial measurement unit or IMU. It is reminded that the inertial measurement unit is a combination of angular speed sensors and linear acceleration sensors and that it is capable of calculating with great accuracy, changes of position and/or orientation over a short period. To obtain the orientation measurement relating to the desired absolute direction, referenced on the map (geographic North), one single high-accuracy reference point is sufficient (IMU north reference).

Another important application to use one single high precision reference point is, to perform inertial measurements while the user aims at the reference point and to calculate correction parameters of the inertial measurement unit, such as gyroscope biases, from these measurements. It must be noted, that the orientation information obtained by using the corrected observer own geolocation and the corrected geolocation of the reference point allow to correct for the earth rotation during gyroscope bias determination.

A second embodiment of the method of the invention will now be presented, enabling a calibration of the sensors with more than one reference point.

As described above, the mapping module of the program of the processing unit 5 can be used to provide a corrected geolocation of the observation device 1 and a corrected geolocation of the reference points. More elaborated sensor corrections are possible, if several reference directions are provided, i.e. that the corrected geolocation of several reference points is provided, while keeping the corrected position of the observation device.

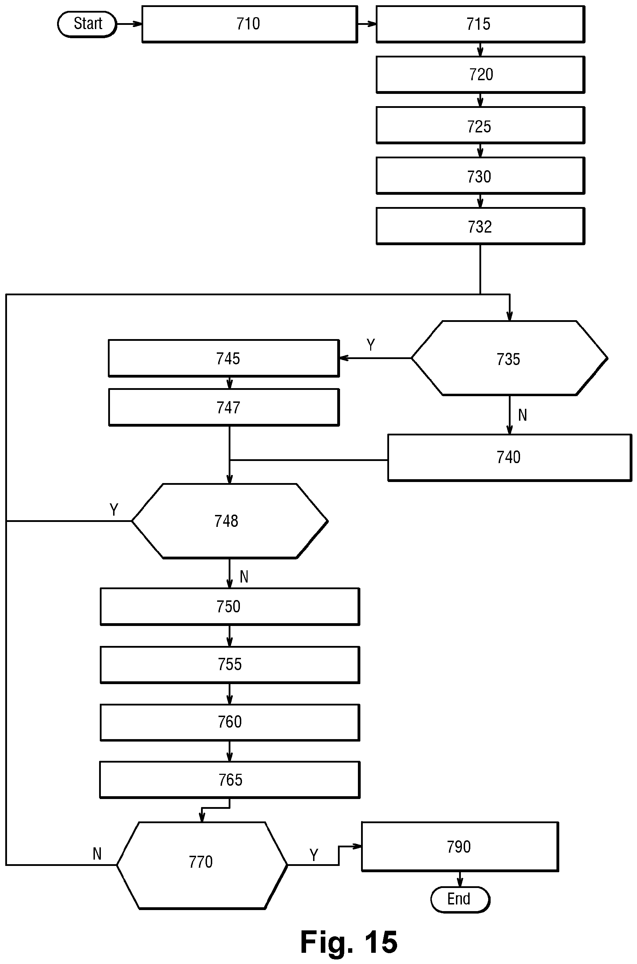

Figure 15 illustrates such a calibration process 700 enabling the calibration of the orientation sensor corrections with several reference points. In this description, "n" is the total number of reference points which will be used.

As above, the process is executed at least partially by a computerized means, namely the processing unit 5 of the observation device 1.

The process 700 starts with receiving a calibration request transmitted by way of the MMI 10 by the user of the observation device 1 (step 710).

In the following step 715, the processing unit 5 determines the own-position OP of the observation device 1, which is provided, in this case, by the satellite receiver 8.

During the following step 720, the processing unit 5 displays a mapping-image (map or aerial image) of the surroundings of the own-position OP via the mapping module.

The mapping-image actually shown to the user can include non-orthogonal projections. It has been seen that drawing rough positions on the mapping-image, calculated from geolocations with respect to ground-level of the mapping-image will lead to a poor correspondence between the marked positions in the mapping-image and the actual content of the mapping-image.

Consequently, in step 725, the mapping correction subroutine CIC corrects the coordinates of the image OP to consider the non-orthogonal projection of the mapping-image. The mapping correction subroutine CIC has already been described in relation to figure 5.

Then, the position refinement subroutine OPR (user refinement of his own-position OP) enables the user, in step 730, to select or correct the own-position OP directly on the mapping-image. The operation OPR makes it possible to obtain a corrected image coordinate of the own-position OP and to draw the corrected own-position on the mapping-image, for example, as a superposed marker (image overlay). This operation has been described in relation to figure 11.

The following step 732 calls on a position correction subroutine CGL (corrected geolocation GL from the mapping-image coordinates) to calculate a correct geolocation OPGL from the corrected coordinates of the image of the own-position. The correction operation CGL has already been described in relation to figure 10.

It is understood that steps 725, 730 and 732 make it possible to refine the own-position (refinement of the geolocation OP).

The display unit 4 now displays a magnified live image of the environment, as well as a mapping-image, for example, in the scope of a "picture in picture" functionality, as illustrated in figure 3.

In following step 735, the user decides if they are able to associate a point of the environment observed with the observation device 1 with a point of the mapping-image. If this is the case, the processing unit 5 passes to step 745, otherwise it returns to step 740.

In step 745, the user selects the identified point (reference point RP) on the mapping-image and the processing unit 5 passes to step 747.

In step 747, the processing unit 5 uses the image coordinate of the RP selected on the mapping-image to calculate the corrected geolocation RPGL using the position correction operation CGL (corrected geolocation GL from mapping-image coordinates) which is illustrated in figure 10. The processing unit 5 continues to step 748.

If step 735 reveals, that the identification is not possible, the processing unit 5 executes an operation SRF for searching and identifying reference points (step 740). This operation, which has already been described in figure 13, results in a corrected geolocation RPGL for a selected reference point RP, which can be identified by the user close by and, later (in step 755), targeted by the observation device 1. From step 740, the processing unit 5 continues with step 748.

In step 748 the processing unit 5 compares the geolocation of the actual examined reference point to a list of previously measured reference points (for the first execution, the list is empty).

If the geolocation of the new point is close to that of a previous point, the new point is a repetition and cannot be used: the processing unit 5 goes to step 735.

If the geolocation of the new point is far enough from any preceding point, the examined reference point is a new reference point (the i. reference point) and the processing unit goes to step 750, wherein it calculates, from the corrected geolocations OPGL and RPGL, the geographic azimuth angle $\alpha_i$ of the sight axis of the observation device 1 from the position OP to the reference point RP.

In the following step 755, the processing unit 5 requests the user to orient the observation device 1 towards the reference point and goes to step 760 to perform a DMC measurement with the digital magnetic compass 7 which measures $g_i$ the vector of the gravitation field and $m_i$ the vector of the magnetic field, both with respect to the local DMC coordinate system.

During following step 765, the processing unit 5 adds the new reference point (the i. reference point) to the list of reference points. The recorded data comprises $g_i$, $m_i$ and $\alpha_i$.

The processing unit 5 then determines if there are already enough reference points (i.e. n different reference points) on the list of reference points (step 770).

If the decision is negative, the processing unit returns to step 735 to perform another reference point measurement.

If the decision is positive, the list of reference points contains n different reference points and the processing unit 5 can continue with step 790, which calibrates the corrections of the sensor (for example, the DMC compensation parameters) by using the n reference points from the list of reference points. The calibration request from the user is thus completed, the calibration process 700 ends and is repeated when another calibration request is received in step 710.

As an example of application of the calibration process 700, the case n=2 is studied, where two reference points $P_1$ and $P_2$ are provided to the processing unit 5, which can recalculate the local magnetic declination and the magnetic compensation of the digital magnetic compass 7. The hard magnetic compensation and the soft magnetic compensation of the digital magnetic compass 7 are measurement error corrections used by the digital magnetic compass 7 to overcome magnetic field disturbances caused by internal magnetic sources in the observation device 1 or caused by ferromagnetic components in the observation device 1.

The basic model for the magnetic field disturbances is:

$$m_m = m_0 + M \star R \star m$$

Where:

- $m_m$ is the disturbed magnetic field vector measured by the digital magnetic compass 7 (local DMC coordinate system of the digital magnetic compass 7);
- $m$ is the undisturbed magnetic field vector from the Earth's magnetic field (in mapping coordinates, for example NED);
- $R$ is a rotation matrix R ($R_1$ or $R_2$ according to the targeted reference point $P_1$ or $P_2$) and transforms the mapping coordinates into a local DMC coordinate system;
- $m_0$ is the hard magnetic disturbance vector, i.e. magnetic fields from magnetic sources internal to the observation device 1 are added to the measurement;
- $M$ is a 3x3 matrix representative of the impact of the internal ferromagnetic components. For M exists the inverse matrix $Q = M^{-1}$.

Note, that without the hard magnetic compensation, i.e. without the actual vector $m_0$, the errors in measuring the orientation of the Earth's magnetic field are high.

For calculating the hard magnetic disturbance vector $m_0$, the soft magnetic matrix M is used, which is obtained, for example, during a factory calibration step.

The inverse matrix $Q = M^{-1}$ can thus be calculated and an equation system is set up:

$$g_1 = R_1 \star (0,0,1)^T$$

$$g_2 = R_2 \star (0,0,1)^T$$

$$b = R_1 \star u_1$$

$$b = R_2 * u_2$$

$$Q * m_1 = Q * m_0 + R_1 * m$$

$$Q * m_2 = Q * m_0 + R_2 * m$$

Where:

- $R_1$ is the rotation matrix from the mapping coordinate system (north-east-down, NED) to the local DMC coordinate system when aiming at reference point $P_1$ and $R_2$ is the corresponding rotation matrix when aiming at the reference point $P_2$;
- b is the sight axis vector in the local DMC coordinate system;
- $g_1$ and $g_2$ are the two gravity field vectors measured by the digital magnetic compass 7 in the local DMC coordinate system for the two reference points $P_1$ and $P_2$;
- $m_1$ and $m_2$ are the two magnetic field vectors measured by the digital magnetic compass 7 in the local DMC coordinate system for the two reference points $P_1$ and $P_2$ respectively;
- m is the undisturbed magnetic field vector from the Earth's magnetic field (mapping coordinate system).
- $m_0$ is the hard magnetic disturbance vector, which is constant in the local DMC coordinate system when moving from $P_1$ to $P_2$;
- $u_1$ and $u_2$ are unit vectors representing the directions of the observer's position towards the reference points $P_1$ and $P_2$ in mapping coordinates (for example, NED). The unit vector $u_1$ is calculated from the measurement data of the first reference point $P_1$ on the list of reference points, more specifically, the gravity field vector $g_1$ and the geographic azimuth angle $\alpha_1$. In the same way, the second vector $u_2$ is obtained.

By using the two DMC measurements ($g_1$, $g_2$, $m_1$, $m_2$) for the two reference points, these six equations can be resolved for m and $m_0$ according to the two directions $u_1$ and $u_2$ of the reference points $P_1$ and $P_2$, and a rough estimate of the magnetic inclination (vertical component of the vector of the Earth's magnetic field) which can be determined from a World Magnetic Model (WMM). The recalibrated hard magnetic compensation of the digital magnetic compass 7 is used for the subsequent measurements, providing precise DMC orientation measurements.

If more than two reference points are available, it is possible to calculate for more sensor correction parameters. The mapping module of the program of the processing unit 5 provides the corrected position of the observation device 1 (own-position) as described above. The user can then select the positions of the reference points on the map, or the mapping system classifies the quality of the reference points in the proximity.

To recalibrate both the hard magnetic compensation and the soft magnetic compensation with the process 700, there must be at least n=6 reference points. As described above, the mapping module is perfect for providing a multitude of reference points with a high-accuracy geolocation.

The recalibrated hard and soft magnetic compensations of the digital magnetic compass 7 are used for the subsequent orientation measurements of the digital magnetic compass 7. As long as the magnetic properties of the observation device do not change, the updated calibration allows for high-accuracy DMC orientation measurements.

Naturally, the invention is not limited to the embodiment described, but includes any variant entering into the field of the invention such as defined by the claims.

In particular, the observation device 1 can have a different structure from that described.

It can, for example, comprise several screens, a keyboard and/or be arranged to be embedded into a vehicle. It can be handheld or arranged to be portable and set on a tripod.

The invention can be implemented with any type of means for measuring the orientation of an object at least in a plane, or in space, for example a magnetic compass, an inertial unit or the like.

Any type of rangefinder or other distance-measuring device can be used in place of the laser range-finder.

It can be provided to motorize the laser range finder 6, such that this can be moved with respect to the viewing member. This makes it possible to move the measuring point in a scene observed without moving the observation device 1. For that, the MMI 10 preferably comprises a joystick enabling the user to control the movement motorization of the laser range finder 6. The reticle is moved correspondingly with the laser range finder 6 to indicate to the user, the zone of the scene onto which the laser range finder 6 is pointed.

In the scope of an extension of the invention described, the stored geographic data (mapping data) can be completed by celestial calculation data and the mapping module by celestial calculation routines. This makes it possible for the mapping module to perform the celestial calculation, based on the position of the observation device and on the time/date to obtain reference directions towards celestial bodies (instead of landmarks), which are added to the reference directions/reference point list determined by the two calibration processes described, and allow for an enhanced calibration of the device. Easily identifiable celestial bodies (sun, moon) can be used directly. Other celestial bodies (stars, planets) can be identified based on a rough DMC orientation measurement or based on their mutual direction difference.

For an observation device with camera, the camera image can be used to train a pattern recognition method to a reference point for later automatic recognition of the reference point. In such a method, the observation device is used to record an image of a reference point and of its vicinity. At the time of capturing the image, the sensors of the observation device are used to determine the orientation of the sight axis. This operation can be performed by the DMC measurement or by a combination (24) with other sensors, such as an inertial measurement unit. The recorded image is presented to the user. It must be noted that the position of the image of the reference point is not necessarily the same as the position of the image of the sight axis indicated by the reticle marker RM overlaid on the images presented on the display 4: the user moves a cursor over the position of the image of the desired reference point and thus selects this reference point. The standard pattern recognition method is trained on the vicinity of the selected reference point. It is known that the errors in measuring the orientation of the sight axis increase over time (for example, due to IMU internal sensors drifts or due to the change of magnetic environment of the digital magnetic compass). To avoid erroneous measurement results, the user performs a control of the measurement of the sensor at certain time intervals. The user starts the control by capturing an image of the reference point and its surroundings (note, that the reference point in the new image again does not need to be aimed with the reticle marker RM, but only needs to be in the field of view of the camera 3). The pattern recognition method recognizes the reference point in the new image and, again, at the time of capturing the image, the sensors are used to determine the orientation of the sight axis, which can now be erroneous. The position of the reference point in the image is calculated from the estimated orientation (in this case, erroneous) of the sight axis and from the direction of the reference point (obtained from the mapping coordinates of the reference point and from the mapping coordinates of the observation device 1). An image position error $\Delta$ can be detected, comparing the calculated reference point image position and the correct image position from pattern recognition result. By applying the camera calibration to the image position error $\Delta$, an angular error is determined and compared with the desired angular measurement accuracy.

If the angular error is not within the limits, a recalibration must be performed, for example, by using one of the processes described above.

Typically, the gravity field direction can be determined from sensors of the observation device, like the digital magnetic compass, with a low, even insignificant error drift. If this is possible, the gravity field vector can be measured, and an automated recalibration is possible (instead of a simple automated verification of the calibration, as described above). The measured gravity field vector is converted to camera coordinates. The result of the pattern recognition is the camera coordinates of the correct reference point direction. The directional correspondences (map to camera) for the two directions (gravity field, reference point) allow to calculate the correct orientation of the camera, and therefore of the observation device. This correct orientation can be used for the calibration of the observation device, as described above. This operation can be performed with several reference points, in order to calibrate further parameters of the observation device.

In alternative embodiments, the method does not need to comprise all the steps described in relation to the figures, but only some of them.

**Claims**

1. Method for calibrating a terrestrial observation device (1) comprising a viewing member (3) defining a sight axis, a range finder (6) for determining a distance from a reference point being located on the sight axis, an orientation-measuring member (7) for measuring the orientation of the sight axis to determine a current orientation of the sight axis, a display unit (4) and an electronic processing unit (5), the method comprising the steps, commanded by the processing unit, of:

   . displaying a mapping-image on the display unit, corresponding to a current position of the observation device;
   . representing the current position and the sight axis from the current orientation on this mapping-image;
   . having a user indicate, on the mapping-image, the reference point aimed at with the range-finder, and determining the position of the reference point indicated by the user on the mapping-image;
   . deducing from this, a correction parameter of the current orientation of the sight axis.

2. Method according to claim 1, comprising the step of representing, on the mapping-image, at least one limit of uncertainty of measuring the orientation of the sight axis.

3. Method according to claim 1, comprising the step of representing, on the mapping-image, at least one angular limit of uncertainty of measuring the distance from the reference point.

4. Method according to any one of the preceding claims, comprising the step of indicating, to the user, on the mapping-image, a corrected current position of the observation device, and representing the sight axis on the map from the corrected current position.

5. Method according to any one of the preceding claims, comprising the step of correcting positions in the mapping-image to compensate for a non-orthogonal projection.

6. Method according to claim 5, comprising the step of determining a non-orthogonal projection correction vector and of applying said vector to positions in the mapping-image.

7. Method according to any one of the preceding claims, comprising the step of identifying several reference points and deducing a correction parameter from the current orientation of the sight axis for each of the reference points.

8. Method according to any one of the preceding claims, wherein the orientation-measuring member (7) comprises a digital magnetic compass.

9. Terrestrial observation device (1) comprising a viewing member (3) defining a sight axis, a range finder (6) for determining a distance from a reference point being located on the sight axis, an orientation-measuring member (7) for measuring the orientation of the sight axis to determine a current orientation of the sight axis, a display unit (4) and an electronic processing unit (5) arranged to implement the method according to any one of the preceding claims.

Fig. 1

Fig. 2

**Fig. 3**

EP 4 679 031 A1

Start

110

115

120

125

130

132

135

N

140

Y

145

147

150

155

160

165

End

**Fig. 4**

**Fig. 5**

EP 4 679 031 A1

**Fig. 6a**

Fig. 6b

## Fig. 7a

## Fig. 7b

X1          X2

## Fig. 8

**Fig. 9a**

**Fig. 9b**

Fig. 10

Input OP image coordinate OPIC

Start

510

520

Y

530

N

Y

540

N

550

560

570

580

**Fig. 11**

**Fig. 12**

# Fig. 13

OP

A4

A5

A2

A1

A3

**Fig. 14a**

**Fig. 14b**

**Fig. 15**

Europäisches
Patentamt

European
Patent Office

Office européen
des brevets

## EUROPEAN SEARCH REPORT

**Application Number**

EP 24 18 7553

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 110 388 940 A (XIAN INST OF APPLIED OPTICS) 29 October 2019 (2019-10-29) | 1-7,9 | INV. G01C15/00 |
| Y | * paragraphs [0001] - [0070]; figure 5 * | 1,9 | F41G3/00 G01C25/00 |
| X | FR 3 099 243 A1 (NEXTER SYSTEMS [FR]) 29 January 2021 (2021-01-29) | 1,8,9 | G01S17/06 |
| Y | * paragraphs [0003] - [0043] * | 1,8,9 | |
| Y | US 2015/355328 A1 (MARYFIELD TONY [US] ET AL) 10 December 2015 (2015-12-10) * abstract * * paragraphs [0053] - [0063] * | 1,8,9 | |
| A | US 2024/202968 A1 (NILSSON LINNEA [SE] ET AL) 20 June 2024 (2024-06-20) * abstract * | 1,9 | |

| TECHNICAL FIELDS SEARCHED (IPC) |
|---|
| F41G G01C G01S G06T |

The present search report has been drawn up for all claims

| Place of search | Date of completion of the search | Examiner |
|---|---|---|
| The Hague | 12 December 2024 | van Doornum, A |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 7553

This annex lists the patent family members relating to the patent documents cited in the above-mentioned European search report.
The members are as contained in the European Patent Office EDP file on
The European Patent Office is in no way liable for these particulars which are merely given for the purpose of information.

12-12-2024

| Patent document cited in search report | | Publication date | Patent family member(s) | | Publication date |
|---|---|---|---|---|---|
| CN 110388940 | A | 29-10-2019 | NONE | | |
| FR 3099243 | A1 | 29-01-2021 | EP | 4004492 A1 | 01-06-2022 |
| | | | FR | 3099243 A1 | 29-01-2021 |
| | | | KR | 20220035238 A | 21-03-2022 |
| | | | WO | 2021014294 A1 | 28-01-2021 |
| US 2015355328 | A1 | 10-12-2015 | US | 2015355328 A1 | 10-12-2015 |
| | | | WO | 2015191750 A2 | 17-12-2015 |
| US 2024202968 | A1 | 20-06-2024 | EP | 4315249 A1 | 07-02-2024 |
| | | | SE | 2100043 A1 | 01-10-2022 |
| | | | US | 2024202968 A1 | 20-06-2024 |
| | | | WO | 2022211708 A1 | 06-10-2022 |

For more details about this annex : see Official Journal of the European Patent Office, No. 12/82

**EP 4 679 031 A1**

**Patent documents cited in the description**

- FR 2916839 A